# EUROPEAN PATENT SPECIFICATION

(11) **EP 1 597 492 B1**
(45) Date of publication and mention of the grant of the patent: **22.03.2017**
(21) Application number: 03816048.7
(22) Date of filing: 28.02.2003
(51) Int. Cl.: F16D 65/095, F16D 65/092

(54) **PAD AND CALIPER OF A DISK BRAKE**
BELAG UND SATTEL EINER SCHEIBENBREMSE
PLAQUETTE ET ETRIER DE FREIN A DISQUE

(43) Date of publication of application: 23.11.2005
(73) Proprietor: Freni Brembo S.p.A., 24035 Curno (IT)
(72) Inventor: LAVEZZI, Roberto, I-24030 Brembate Di Sopra (IT); CARMINATI, Fabiano, I-24030 Mozzo (IT); DOMENGHINI, Giuseppe, I-24057 Martinengo (IT)
(74) Representative: Crippa, Paolo Ernesto
(86) International application number: PCT/IT2003/000114
(87) International publication number: WO 2004/076885

(56) References cited:
- FR-A- 1 367 190
- FR-A- 1 491 828
- PATENT ABSTRACTS OF JAPAN vol. 007, no. 291 (M-265), 27 December 1983 (1983-12-27) -& JP 58 163833 A (TOKICO), 28 September 1983 (1983-09-28)

## Description

The present invention relates to a caliper of a disk brake.

It is known that in the brake sector, and in particular in the disk brake sector, it is felt that there is a need to produce brakes that are capable of combating undesired vibration phenomena which, in addition to causing irritating noise and accelerating wear phenomena, are interpreted by the user as a symptom of a malfunction of the brake.

Numerous constructions known in the sector aim to combat the occurrence of such vibration phenomena by resorting to many and various solutions since even today there is no unequivocal and well defined explanation for the occurrence of these phenomena, and consequently no unequivocal solutions for combating them. Examples of pad and caliper of a disk brake are disclosed in documents FR1367190A, FR1491828A and JP58163833A.

The problem underlying the present invention is to provide a disk brake caliper which has structural and functional characteristics such as to satisfy the above-mentioned requirements, exhibiting unusually beneficial effects with regard to the combating of vibration phenomena.

The problem is solved by a caliper according to claim 1. The dependent claims describe variants.

The characteristics of the caliper according to the invention will emerge from the description given hereinafter of a preferred and non-limiting embodiment thereof, in which:
Figure la is a side view of a caliper;

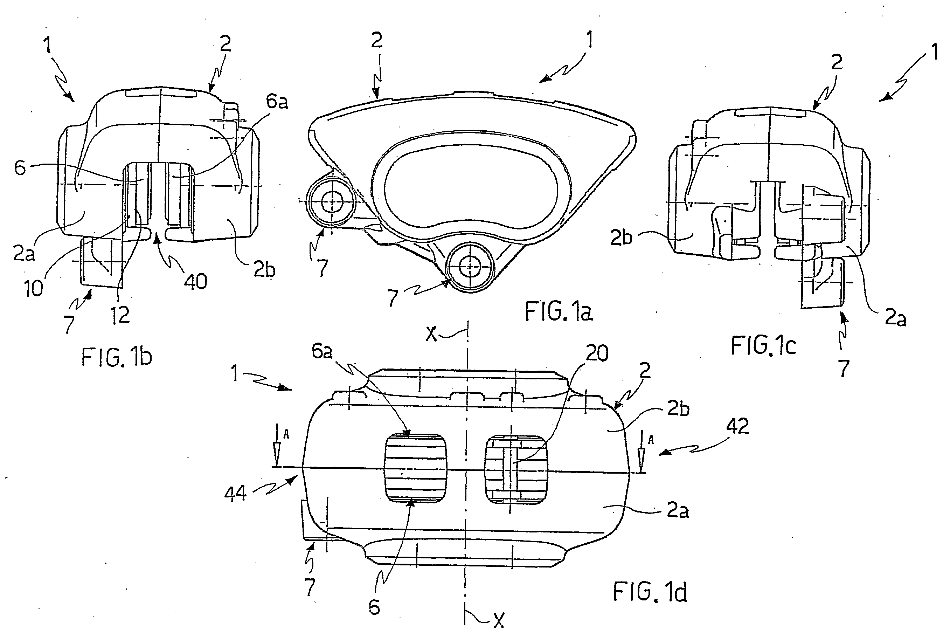

Figures 1b and 1c show, respectively, a front end view (region of entry of the disk or head region) and a rear end view (region of exit of the disk or tail region) of the caliper of Figure 1a;
Figure 1d is a plan view of the caliper of Figure 1a;
Figure 2 is a partly sectioned view, taken on the section line A-A of Figure 1d, of the caliper of Figure 1a which accommodates a pad according to a first variant;
Figure 3 is a partly sectioned view of a caliper which accommodates a pad according to a further variant;

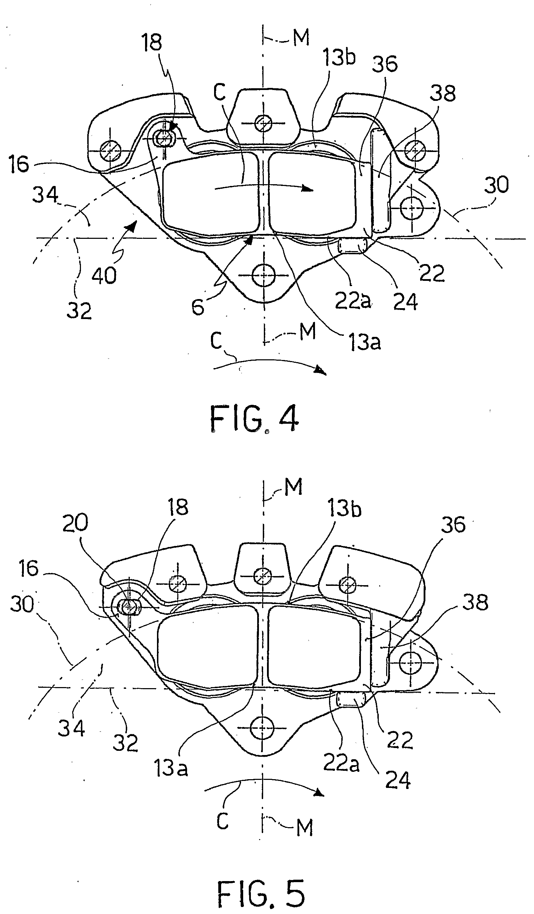

Figure 4 is a partly sectioned view of a caliper which accommodates a pad according to a further variant;
Figure 5 is a partly sectioned view of a caliper which accommodates a pad according to a further variant.

In the course of the description, reference will be made to the terms "circumferential", "tangential" and "radial" with regard to directions and axes which are to be understood with reference to the disk of the disk brake which can be associated with the caliper suitable for co-operating with the pad.

With reference to the appended Figures, 1 generally indicates a disk brake caliper which can be associated with a brake disk (not shown).

The disk brake has a disk comprising an annular braking band connected to the wheel hub of a vehicle, on which the disk brake is mounted, for example, by means of a connecting bell.

In an assembled configuration of the disk brake, the caliper 1 straddles the disk.

During normal use of the vehicle, the disk rotates about an axis of rotation X-X.

The caliper 1 comprises a caliper body 2 connected to a fixed portion of the vehicle chassis and provided with at least one housing 4 for accommodating a pad 6.

In a variant, the caliper body 2 is composed of a first half-body 2a and of a second half-body 2b, each of the half-bodies having a housing for accommodating a respective pad 6, 6a.

According to this variant, connecting portions 7 provided on the half-body 2a are suitable for connecting the caliper body 2 to the fixed portion of the vehicle chassis.

The caliper 1 also comprises thrust means suitable for acting on the pad 6 to cause it to abut the braking surface of the disk.

According to a preferred embodiment, the thrust means comprise an hydraulic circuit and at least one piston which, acted upon by brake fluid placed under pressure by the user during braking, acts on the pads 6, 6a, causing them to abut the braking band of the disk in order to perform the braking operation.

In a preferred embodiment, the caliper 1 is of the fixed type. In a further variant, the caliper is of the floating type.

The pad 6 comprises a plate 8, having a rear surface 10, on which the piston of the thrust means acts, and a front surface 12 which, in an assembled configuration of the disk brake, faces the braking surface of the disk.

The plate 8 also comprises a lower surface 13a which, in an assembled configuration of the disk brake in which the pad 6 is accommodated in the housing 4, faces the axis of rotation X-X of the disk, and an upper surface 13b opposite the lower surface 13a.

In other words, the upper surface 13b of the plate 8 is further away from the axis of rotation X-X of the disk than is the lower surface 13a.

Also in other words, when the pad 6 is accommodated in the caliper body 2, the upper surface 13b of the plate 8 means the surface visible from outside the caliper body, looking at the plate through the openings in the caliper body in the portion remote from that having the portions for connection to the vehicle chassis.

The plate 8 comprises a plate body 14 which extends substantially in a circumferential or tangential direction of the disk of the disk brake.

According to one configuration, the plate body 14 is substantially rectangular. In a variant, the plate body is shaped in such a manner that it substantially follows the curvature of the braking band of the disk.

The plate 8 also has a protuberance 16 which extends from the plate 8, forming a seat 18 for a pin 20 for suspending the pad 6 from the caliper body 2.

In other words, the seat 18 co-operates with the suspensions pin 20 provided in the caliper body 2 in order to connect or to constrain in a removable manner the pad to the caliper body.

In a preferred embodiment, the seat 18 for the suspension pin 20 is an eyelet.

Preferably, the eyelet 18 is coupled to the suspension pin 20 of the caliper body 2 with play.

The plate 8 also has a support portion 22 at the location of the lower surface 13a of the plate 8, which portion is suitable for co-operating with a support protuberance 24 provided on the caliper body 2.

In particular, the support portion 22 bears on the support protuberance 24 by way of a bearing surface 22a.

In other words, the plate body 14 has a portion which is provided to bear on the support protuberance 24 of the caliper body 2.

The pad 6, accommodated in the caliper body 2, is suspended by the protuberance 16 from the caliper body 2 and bears by way of the support portion 22 on the support protuberance 24.

Also in other words, the pad co-operates with the caliper body at the location of the seat 18 for the suspension pin 20 and at the location of the support portion 22, while the upper surface 13b of the plate 8 does not bear on the caliper body 2.

Advantageously, this arrangement produces a functioning of the pad during braking which has reduced vibration phenomena.

The pad 6 also comprises friction material 26, 28 supported on the front surface 12 of the plate 8.

Once the brake disk has been set in rotation, in an assembled configuration of the brake, the friction material 26, 28 defines a swept surface on the rotating disk, in particular on the braking band of the disk.

The seat 18 for the suspension pin 20, and the support portion 22 of the lower surface 13b of the plate 8 are positioned outside the surface swept by the friction material.

Preferably, the seat 18 for the suspension pin 20, and the support portion 22 of the lower surface 13b of the plate 8 are located on the side remote from the friction material.

In a preferred embodiment, the friction material comprises separate islands 26, 28 of friction material, preferably two, which are arranged circumferentially side by side.

In a further variant, the friction material is composed of a single continuous element, which is preferably notched, if necessary, or of three or more islands of material.

The friction material 26, 28 is supported on the front surface 12 of the plate 8, being contained within an area between an outer peripheral surface 30 and an inner peripheral surface 32.

In an assembled configuration of the disk brake in which the caliper straddles the disk and the pad 6 is accommodated in the housing 4 of the caliper body 2, with respect to the axis of rotation X-X of the disk, the inner peripheral surface 32 is radially closer to the axis of rotation X-X of the disk than is the outer peripheral surface 30.

In other words, the friction material 26, 28 is contained within an area of action 34 determined by the outer peripheral surface 30 and by the inner peripheral surface 32 which intersect to delimit the area of action 34.

In particular, the outer peripheral surface is represented by the cylindrical surface which has an axis coinciding with the axis of rotation X-X of the disk and which is defined by the extent along said axis of the outer peripheral edge of the braking band.

In other words, in an assembled configuration of the brake, the braking band of the disk has an outer circular edge which defines the outer peripheral surface of the action area of the friction material.

The inner peripheral surface is represented by a flat surface on which the edge of the support portion 22 of the plate 6 lies.

The cylindrical outer peripheral surface 30 and the flat inner peripheral surface 32 intersect to delimit the area of action 34, which is substantially in the form of a segment of a circle.

The seat 18 of the protuberance 16 of the plate 8 is located outside the action area 34 determined by the peripheral surfaces 30, 32, in particular radially further away from the axis of rotation X-X of the disk than is the outer peripheral surface 30 of the action area 34.

Also preferably, the support portion 22 of the plate 8 is located outside the action area 34 determined by the limit surfaces 30, 32, in particular radially closer to the axis of rotation X-X of the disk than is the inner peripheral surface 32 of the action area.

In particular, the friction material 26, 28 is located above the plane 32 defined by the bearing surface 22a of the support portion 22 on the support protuberance 24.

The seat 18 of the protuberance 16 and the support portion 22 of the plate 8 are located along a straight line R-R which extends through the action area 34, while the said seat 18 and the said support portion remain outside the action area on the side remote therefrom.

In an assembled configuration of the brake, a radial axis, called the median radial axis M-M, extends through the circumferential centre line of the plate body 14 and through the centre of the brake disk.

In a preferred embodiment, the straight line R-R along which the seat 18 and the support portion 22 are located, is inclined relative to the median radial axis M-M by a predetermined angle B of from 35° to 80°, or preferably from 45° to 75°, or preferably equal to 47° or to 70°.

The pad 6 also comprises a reaction region 36 which is suitable for co-operating with a rib 38 of the caliper body 2 in order to transfer the braking force generated during braking from the friction material 26, 28 to the caliper body 2 and, finally, to the fixed portion of the vehicle chassis.

The reaction region 36 comprises a portion of the plate body 14.

The reaction region 36 of the plate 8 extends at the location of a circumferential end of the plate 8, substantially parallel with the median radial axis M-M.

The reaction region 36, together with the rib 38 of the caliper body 2, represents reaction means suitable for transferring the braking force generated during braking from the friction material 26, 28 to the fixed portion of the vehicle chassis.

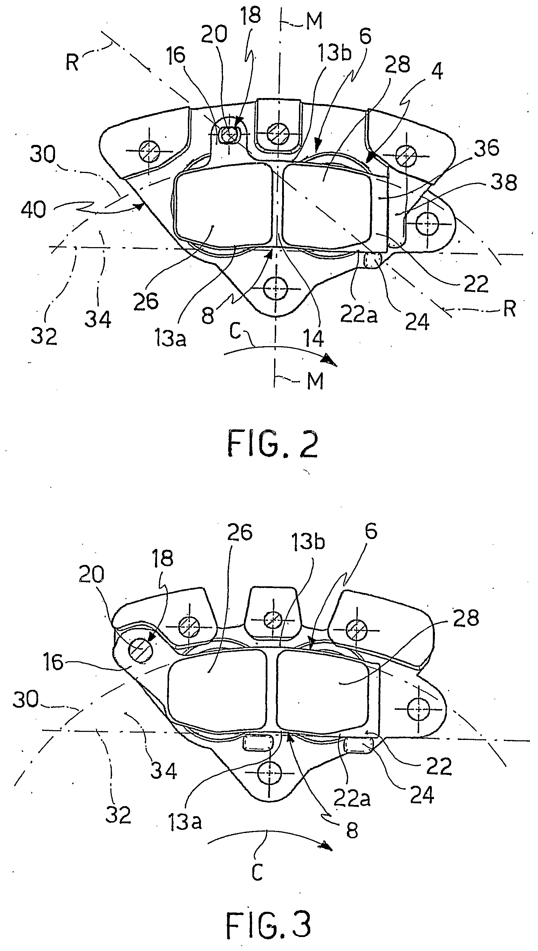

In a further variant, the reaction means comprise the seat 18 and the suspension pin 20 (Figure 3).

The caliper body 2 is suitable for accommodating the pad 6 in the housing 4.

The caliper body has the suspension pin 20 which engages with the seat 18 of the protuberance 16 of the pad 6, and the support protuberance 24 on which the support portion 22 of the pad bears.

The suspension pin 20 is located above the plane 32 defined by the bearing surface 22a of the support portion 22 of the plate 8 on the support protuberance 24.

The suspension pin 20 and the support protuberance 24 are located outside the action area 34 of the pad 6, in a configuration where the pad is accommodated in the caliper body.

The caliper body 2 has the rib 38 which is suitable for co-operating with the reaction region 36 of the pad in order to oppose the braking force generated in the course of a braking operation.

Preferably, the caliper body 2 has an insertion/withdrawal opening 40 suitable for the passage of the pad 6.

In one embodiment of the caliper body 2, the opening 40 is located at the front of the caliper body, circumferentially on the opposite side relative to the rib 38 of the caliper body.

In the assembled configuration of the disk brake, with the vehicle in motion, the disk rotates about the axis of rotation X-X, in accordance with a travelling direction of rotation, indicated in the appended Figures by the arrow C.

In the course of rotation, the disk passes through the caliper body 2, entering by a first region, the head region 42 of the caliper body 2, and exiting by a second region, the tail region 44.

In the said assembled configuration of the disk brake, the protuberance 16 of the pad 6 provided with the seat 18 for the suspension pin 20 is located at the head region 42 of the caliper body 2, while the support portion 22 is located at the tail region 44.

Correspondingly, the suspension pin 20 of the caliper body 2 is located at the head region 42 of the caliper body 2, while the support protuberance 24 is located at the tail region 44.

The reaction region 36 of the pad 6 is located at the tail region 44 of the caliper body 2, with respect to the direction of rotation C of the disk during normal travel of the vehicle.

Correspondingly, the rib 38 of the caliper body 2 is located at the tail region 44 of the caliper body 2.

In the course of a braking operation, in a first variant, the pad 6 is caused by the braking force generated by the friction material 26, 28 to abut the rib 38 by way of the reaction region 36, while remaining stably bearing on the support protuberance 24.

The seat 18 of the protuberance 16, coupled with play to the suspension pin 20, advantageously enables the pad to discharge substantially the entire braking force onto the rib 38, while it protects the pad from undesired wobbling movements and lateral instability which are held to cause vibration phenomena.

In a further variant, the braking force generated by the friction material 26, 28 is absorbed by the suspension pin 20, the pad remaining stably bearing on the support protuberance 24.

In the course of a servicing intervention to replace a pad, the protuberance 16 is disengaged from the suspension pin 20, for example, by previously removing the pin 20 from the caliper body 2.

Once the pad has been gripped, it is withdrawn from the caliper body 2, passing through the opening 40 provided at the front of the caliper body 2.

In other words, the withdrawal of the pad 6 takes place in accordance with a tangential and/or circumferential movement relative to the disk.

The disk brake caliper and pad according to the invention, provided with a support portion located beneath the bearing plane, has demonstrated unusually beneficial effects with regard to the occurrence of vibration phenomena.

In particular, the support portion represents an efficacious bearing for the pad while the eyelet engages with the eyelet pin in such a manner as to stabilise the pad as a whole, for example, with regard to lateral instability and wobbling phenomena.

It has been found that the arrangement of the eyelet and the support portion outside the action region defined makes it possible to optimise the location of the resultant forces acting on the pad as a consequence of the braking force acting thereon.

Furthermore, the location of the eyelet outside the outer peripheral surface and of the support portion outside the inner peripheral surface makes it possible to increase the size of the reaction couples produced by these resultant forces and to oppose phenomena such as wobbling and lateral instability.

In addition, the arrangement of the eyelet at the head region of the caliper and of the support portion at the tail region thereof has demonstrated improved behaviour with regard to vibration phenomena generated by stick-slip phenomena and the like.

According to a further advantageous aspect, the eyelet, acting as the only support of the pad, enables the braking force to be transmitted to the rib of the caliper in an optimum manner, that is to say, in such a manner that the reaction region of the pad abuts the rib provided in a stable manner.

The caliper, which is suitable for accommodating the pad, has a caliper body of advantageously limited dimensions, which is particularly suitable for uses in which the space available for mounting the caliper is limited, such as, for example, in the case of calipers for motorcycle use.

The eyelet-pin system and the support portion-protuberance system, being located outside the action region of the friction material, permit the formation of a front opening for the insertion and/or withdrawal of the pad.

The caliper body is therefore constructed around the pad so as to envelop it, thus reducing the overall volume of the caliper body.

Also advantageously, the caliper body is light in weight.

According to a further advantageous aspect, the caliper body can be produced simply and rapidly since coupling with play between the eyelet and the eyelet pin permit the performance of machining operations without tight tolerances in respect of the position of the rib of the caliper body.

In addition, the caliper body removes the necessity to machine some surfaces, such as the abutment surface of the rib, which is put to use in its cast form.

It will be appreciated that a person skilled in the art, in order to satisfy contingent and specific requirements, can introduce numerous modifications and variants to the pad and the caliper described above, which are all to be regarded as contained within the scope of protection of the invention as defined by the following claims.

## Claims

1. A caliper (1) of a disk brake suitable for co-operating with at least one pad (6), wherein the caliper comprises a caliper body (2), provided with a housing (4) for accommodating the pad (6), and thrust means suitable for acting on the pad (6) in order to cause it to abut a braking surface of a disk of the disk brake having an axis of rotation (X-X), in order to perform a braking operation, the pad comprising
- a support plate (8) having a rear surface (10), on which the thrust means act during a braking operation, a front surface (12) facing the braking surface of the disk, a lower surface (13a) and an upper surface (13b), opposite the lower surface (13a) wherein said upper surface (13b) does not bear on the caliper body (2);
- friction material (26, 28), supported on the front surface (12) of the plate (8), which defines a swept surface on the rotating disk;
- a protuberance (16), of the upper surface (13b) which extends from the plate (8), being positioned outside the surface swept by the friction material;
- a support portion (22) of the lower surface (13a) of the plate (8) which is positioned outside the surface swept by the friction material;
- reaction means suitable for transferring the braking force generated during a braking operation to the vehicle chassis, wherein the reaction means comprise a reaction region (36) which extends at the location of a circumferential end of the plate (8) ;
wherein the caliper (1) comprises:
i) a suspension pin (20) for the suspension of the pad (6) coupleable in a seat housed in the protuberance (16) ;
ii) a support protuberance (24) co-operating with the support portion (22) positioned outside the surface swept by the friction material;
iii) a rib (38), suitable for co-operating with the reaction region (36) of said pad (6) ;
**characterised by** the fact that
the rib (38) and the reaction region (36) are parallel with a median radial axis (M-M).

2. A caliper (1) of a disk brake according to claim 1, also having an opening (40) at the location of a head region (42) of the caliper body (2), relative to the direction of rotation (C) of the disk during normal travel of the vehicle.

3. A caliper (1) of a disk brake according to claim 2, wherein the opening (40) is suitable for the insertion/withdrawal of the pad (6).

4. A caliper (1) of a disk brake according to any one of the preceding claims, wherein the caliper is of the fixed type.

5. A caliper (1) of a disk brake according to any one of claims 1 to 3, wherein the caliper is of the floating type.

6. A system comprising a caliper (1) of a disk brake according to any one of the preceding claims, and at least a pad (6) housed in said caliper (1), the pad (6) comprising a support plate (8) having a rear surface (10), on which the thrust means act during a braking operation, a front surface (12) facing the braking surface of the disk, a lower surface (13a) and an upper surface (13b), opposite the lower surface (13a); friction material (26, 28), supported on the front surface (12) of the plate (8), which defines a swept surface on the rotating disk;wherein the upper surface (13b) of the plate (8) does not bear on the caliper body (2), and a protuberance (16) which extends from the plate (8), the protuberance forming a seat for the suspension pin (20) for the suspension of the pad from the caliper (1), being positioned outside the surface swept by the friction material (26, 28); the pad also comprising a support portion (22) of the lower surface (13a) of the plate (8), which portion is suitable for co-operating with the support protuberance (24) provided on the caliper body (2) and which is positioned outside the surface swept by the friction material (26, 28).

7. A system according to claim 6, wherein the seat (18), of the pad (6), for the suspension pin (20) and the support portion (22) of the lower surface (13a) of the plate (8) of the pad (6), are arranged on the side remote from the friction material (26,28).

8. A system according to claim 6 or 7, wherein the friction material (26, 28) of the pad (6), is located above the plane defined by the bearing surface of the support portion (22) of the plate (8) on the support protuberance (24).

9. A system according to any one of the claims from 6 to 8, wherein the seat (18) for the suspension pin (20) is an eyelet.

10. A system according to any one of the claims from 6 to 9, wherein the seat (18) and the support portion (22) are located along a straight line (R-R) which is inclined relative to a median radial axis (M-M) by an angle (B) of from 35 to 70.

11. A system according to any one of the claims from 6 to 10, wherein the reaction means comprise the seat (18) coupled to the suspension pin (20) of the caliper body (2).

12. A system according to any one of the claims from 6 to 11, wherein the seat (18) for the suspension pin (20) is located at a head region (42) of the caliper body (2), relative to the direction of rotation (C) of the disk during normal travel of the vehicle.

13. A system according to any one of the claims from 6 to 12, wherein the support portion (22) is located at a tail region (44) of the caliper body (2) relative to the direction of rotation (C) of the disk during normal travel of the vehicle.

14. A system according to any one of the claims from 6 to 13, wherein the reaction region (36) of the pad (6) is located at a tail region of the caliper body (2) relative to the direction of rotation (C) of the disk during normal travel of the vehicle.

15. A system according to any one of the claims from 6 to 14, wherein the seat (18) is coupled with gap to the suspension pin (20).

16. A disk brake comprising a caliper (1) according to any one of claims 1 to 5.

17. A disk brake comprising a system according to any one of claims 6 to 15.

## Patentansprüche

1. Bremssattel (1) einer Scheibenbremse geeignet zum Zusammenwirken mit wenigstens einem Belag bzw. Bremsklotz (6), wobei der Bremssattel einen Bremssattelkörper (2) umfasst, ausgestattet mit einem Gehäuse (4) zum Unterbringen des Bremsklotzes (6), und Druckmittel geeignet zum Einwirken auf den Bremsklotz (6), um zu bewirken, dass dieser an eine Bremsfläche einer Scheibe der Scheibenbremse mit einer Drehachse (X-X) anliegt, um einen Bremsvorgang durchzuführen, wobei der Bremsklotz umfasst:
- eine Trägerplatte (8), die eine Rückfläche (10), auf welche die Druckmittel während des Bremsvorgangs einwirken, eine der Bremsfläche der Scheibe zugewandten Vorderfläche (12), eine untere Fläche (13a) und eine der unteren Fläche gegenüberliegende obere Fläche (13b) aufweist, wobei sich die obere Fläche (13b) nicht am Bremssattelgehäuse (2) abstützt;
- Reibmaterial (26, 28), welches an der Vorderfläche (12) der Platte (8) angebracht ist und eine überstrichene Fläche auf der Drehscheibe definiert;
- ein Vorsprung (16) der oberen Fläche (13b), welcher sich von der Scheibe (8) aus erstreckt und außerhalb der vom Reibmaterial überstrichenen Fläche positioniert ist;
- ein Tragabschnitt (22) der unteren Fläche (13a) der Platte (8), welcher außerhalb der vom Reibmaterial überstrichenen Fläche positioniert ist;
- Reaktionsmittel geeignet zum Übertragen der während des Bremsvorgangs erzeugten Bremskraft auf das Fahrzeugchassis, wobei die Reaktionsmittel einen Reaktionsbereich (36) umfassen, der sich an der Stelle eines Umfangsendes der Platte (8) erstreckt;
- wobei der Bremssattel (1) umfasst:
- i) einen Trag- bzw. Aufhängestift (20) zum Tragen bzw. Aufhängen des Bremsklotzes (6), geeignet zur Verbindung mit einer in dem Vorsprung (16) untergebrachten Aufnahme;
- ii) einen Tragvorsprung (24) zusammenwirkend mit dem Tragabschnitt (22), welcher außerhalb der vom Reibmaterial überstrichenen Fläche positioniert ist;
- iii) eine Rippe (38), geeignet zum Zusammenwirken mit dem Reaktionsbereich (36) des Bremsklotzes (6);
- **dadurch gekennzeichnet, dass**
die Rippe (38) und der Reaktionsbereich (36) parallel zu einer Median-Radialachse (M-M) sind.

2. Bremssattel (1) einer Scheibenbremse nach Anspruch 1, weiter aufweisend eine Öffnung (40) an der Stelle eines Kopfbereichs (42) des Bremssattelkörpers (2), relativ zur Drehrichtung (C) der Scheibe während normalem Fahren des Fahrzeugs.

3. Bremssattel (1) einer Scheibenbremse nach Anspruch 2, wobei die Öffnung (40) geeignet ist für das Einsetzen/die Entnahme des Bremsklotzes (6).

4. Bremssattel (1) einer Scheibenbremse nach einem der vorangehenden Ansprüche, wobei der Bremssattel vom ortsfesten Typ ist.

5. Bremssattel (1) einer Scheibenbremse nach einem der Ansprüche 1 bis 3, wobei der Bremssattel vom schwimmenden Typ ist.

6. System umfassend einen Bremssattel (1) einer Scheibenbremse nach einem der vorangehenden Ansprüche, und wenigstens einen in dem Bremssattel (1) untergebrachten Bremsklotz (6), wobei der Bremsklotz (6) umfasst: eine Trägerplatte, welche eine Rückfläche (10) aufweist, auf welche die Druckmittel während eines Bremsvorgangs einwirken, eine der Bremsfläche der Scheibe zugewandten Vorderfläche (12), eine untere Fläche (13a) und eine der unteren Fläche (13a) gegenüberliegende obere Fläche (13b); Reibmaterial (26, 28), welches sich an der Vorderfläche (12) der Platte (8) abstützt und eine überstrichene Fläche auf der Drehscheibe definiert; wobei sich die obere Fläche (13b) der Platte (8) nicht an dem Bremssattelgehäuse (2) abstützt, und ein Vorsprung (16), welcher sich von der Platte (8) aus erstreckt, wobei der Vorsprung einen Sitz für den Aufhängestift (20) zum Tragen des Bremsklotzes am Bremssattel (1) bildet, welcher außerhalb der vom Reibmaterial (26, 28) überstrichenen Fläche positioniert ist; der Bremsklotz weiter umfassend einen Tragabschnitt (22) der unteren Fläche (13a) der Platte (8), wobei der Abschnitt geeignet ist zum Zusammenwirken mit dem am Bremssattelkörper (2) vorgesehenen Tragvorsprung (24) und der außerhalb der vom Reibmaterial (26, 28) überstrichenen Fläche positioniert ist.

7. System nach Anspruch 6, wobei der Sitz bzw. die Aufnahme (18), des Bremsklotzes (6), für den Aufhängestift (20) und der Tragabschnitt (22) der unteren Fläche (13a) der Platte (8) des Bremsklotzes (6) an der vom Reibmaterial (26, 28) abgewandten Fläche angeordnet sind.

8. System nach Anspruch 6 oder 7, wobei das Reibmaterial (26, 28) des Bremsklotzes (6) oberhalb der Ebene positioniert ist, welche durch die Auflagefläche des Tragabschnitts (22) der Platte (8) an dem Tragvorsprung (24) definiert ist.

9. System nach einem der Ansprüche 6 bis 8, wobei die Aufnahme (18) für den Aufhängestift (20) eine Öse ist.

10. System nach einem der Ansprüche von 6 bis 9, wobei die Aufnahme (18) und der Tragabschnitt (22) entlang einer geraden Linie (R-R) positioniert sind, welche zur Medial-Radialachse (M-M) um einen Winkel (B) im Bereich von 35 bis 70 geneigt ist.

11. System nach einem der Ansprüche von 6 bis 10, wobei die Reaktionsmittel die Aufnahme (18) umfassen, welche an den Aufhängestift (20) des Bremssattelkörpers (2) gekoppelt ist.

12. System nach einem der Ansprüche von 6 bis 11, wobei die Aufnahme (18) für den Aufhängestift (20) in einem Kopfbereich (42) des Bremssattelkörpers (2) relativ zur Drehrichtung (C) der Scheibe während normalem Fahren des Fahrzeugs positioniert ist.

13. System nach einem der Ansprüche von 6 bis 12, wobei der Tragabschnitt (22) in einem Heckbereich (44) des Bremssattelkörpers (2) relativ zur Drehrichtung (C) der Scheibe während normalem Fahren des Fahrzeugs positioniert ist.

14. System nach einem der Ansprüche von 6 bis 13, wobei der Reaktionsbereich (36) des Bremsklotzes (6) in einem Heckbereich des Bremssattelkörpers (2) relativ zur Drehrichtung (C) der Scheibe während normalem Fahren des Fahrzeugs positioniert ist.

15. System nach einem der Ansprüche von 6 bis 14, wobei die Aufnahme (18) mit einem Abstand an den Aufhängestift (20) gekoppelt ist.

16. Scheibenbremse umfassend einen Bremssattel (1) nach einem der Ansprüche 1 bis 5.

17. Scheibenbremse umfassend ein System nach einem der Ansprüche 6 bis 15.

## Revendications

1. Étrier (1) d'un frein à disque adapté pour coopérer avec au moins une plaquette (6), dans lequel l'étrier comprend un corps d'étrier (2) doté d'un logement (4) pour loger la plaquette (6) et des moyens de poussée adaptés pour agir sur la plaquette (6) afin de l'amener à buter contre une surface de freinage d'un disque du frein à disque présentant un axe de rotation (X-X) afin de réaliser une opération de freinage, la plaquette comprenant
- une plaque de support (8) présentant une surface arrière (10), sur laquelle les moyens de poussée agissent pendant une opération de freinage, une surface avant (12) faisant face à la surface de freinage du disque, une surface inférieure (13a) et une surface supérieure (13b), en regard de la surface inférieure (13a), dans lequel ladite surface supérieure (13b) ne porte pas sur le corps d'étrier (2) ;
- un matériau de friction (26, 28) supporté sur la surface avant (12) de la plaque (8) qui définit une surface balayée sur le disque de rotation ;
- une protubérance (16) de la surface supérieure (13b) qui s'étend depuis la plaque (8), étant positionnée en dehors de la surface balayée par le matériau de friction ;
- une partie de support (22) de la surface inférieure (13a) de la plaque (8) qui est positionnée en dehors de la surface balayée par le matériau de friction ;
- des moyens de réaction adaptés pour transférer la force de freinage générée pendant une opération de freinage au châssis de véhicule, dans lequel les moyens de réaction comprennent une région de réaction (36) qui s'étend à l'endroit d'une extrémité circonférentielle de la plaque (8) ;
dans lequel l'étrier (1) comprend :
i) une broche de suspension (20) pour la suspension de la plaquette (6) couplable dans un siège logé dans la protubérance (16) ;
ii) une protubérance de support (24) coopérant avec la partie de support (22) positionnée en dehors de la surface balayée par le matériau de friction ;
iii) une nervure (38) adaptée pour coopérer avec la région de réaction (36) de ladite plaquette (6) ;
**caractérisé par le fait que** la nervure (38) et la région de réaction (36) sont parallèles avec un axe radial médian (M-M).

2. Étrier (1) d'un frein à disque selon la revendication 1, présentant aussi une ouverture (40) sur l'endroit d'une région de tête (42) du corps d'étrier (2) par rapport à la direction de rotation (C) du disque pendant le déplacement normal du véhicule.

3. Étrier (1) d'un frein à disque selon la revendication 2, dans lequel l'ouverture (40) est adaptée pour l'insertion et le retrait de la plaquette (6).

4. Étrier (1) d'un frein à disque selon l'une quelconque des revendications précédentes, dans lequel l'étrier est du type fixé.

5. Étrier (1) d'un frein à disque selon l'une quelconque des revendications 1 à 3, dans lequel l'étrier est du type flottant.

6. Système comprenant un étrier (1) d'un frein à disque selon l'une quelconque des revendications précédentes, et au moins une plaquette (6) logée dans ledit étrier (1), la plaquette (6) comprenant une plaque de support (8) présentant une surface arrière (10), sur laquelle les moyens de poussée agissent pendant une opération de freinage, une surface avant (12) faisant face à la surface de freinage du disque, une surface inférieure (13a) et une surface supérieure (13b) en regard de la surface inférieure (13a) ; un matériau de friction (26, 28) supporté sur la surface avant (12) de la plaque (8) qui définit une surface balayée sur le disque de rotation ; dans lequel la surface supérieure (13b) de la plaque (8) ne porte pas sur le corps d'étrier (2), et une protubérance (16) qui s'étend depuis la plaque (8), la protubérance formant un siège pour la broche de suspension (20) pour la suspension de la plaquette de l'étrier (1), étant positionné en dehors de la surface balayée par le matériau de friction (26, 28) ; la plaquette comprenant aussi une partie de support (22) de la surface inférieure (13a) de la plaque (8), laquelle partie est adaptée pour coopérer avec la protubérance de support (24) prévue sur le corps d'étrier (2) et qui est positionnée en dehors de la surface balayée par le matériau de friction (26, 28).

7. Système selon la revendication 6, dans lequel le siège (18) de la plaquette (6) pour la broche de suspension (20) et la partie de support (22) de la surface inférieure (13a) de la plaque (8) de la plaquette (6) sont agencés sur le côté distant du matériau de friction (26, 28).

8. Système selon la revendication 6 ou 7, dans lequel le matériau de friction (26, 28) de la plaquette (6) est situé au-dessus du plan défini par la surface porteuse de la partie de support (22) de la plaque (8) sur la protubérance de support (24).

9. Système selon l'une quelconque des revendications 6 à 8, dans lequel le siège (18) pour la broche de suspension (20) est un oeillet.

10. Système selon l'une quelconque des revendications 6 à 9, dans lequel le siège (18) et la partie de support (22) sont situés le long d'une ligne droite (R-R) qui est inclinée par rapport à un axe médian radial (M-M) d'un angle (B) de 35 à 70.

11. Système selon l'une quelconque des revendications 6 à 10, dans lequel les moyens de réaction comprennent le siège (18) couplé à la broche de suspension (20) du corps d'étrier (2).

12. Système selon l'une quelconque des revendications 6 à 11, dans lequel le siège (18) pour la broche de suspension (20) est situé sur une région de tête (42) du corps d'étrier (2) par rapport à la direction de rotation (C) du disque pendant le déplacement normal du véhicule.

13. Système selon l'une quelconque des revendications 6 à 12, dans lequel la partie de support (22) est située sur une région arrière (44) du corps d'étrier (2) par rapport à la direction de rotation (C) du disque pendant le déplacement normal du véhicule.

14. Système selon l'une quelconque des revendications 6 à 13, dans lequel la région de réaction (36) de la plaquette (6) est située sur une région arrière du corps d'étrier (2) par rapport à la direction de rotation (C) du disque pendant le déplacement normal du véhicule.

15. Système selon l'une quelconque des revendications 6 à 14, dans lequel le siège (18) est couplé avec une fente à la broche de suspension (20).

16. Frein à disque comprenant un étrier (1) selon l'une quelconque des revendications 1 à 5.

17. Frein à disque comprenant un système selon l'une quelconque des revendications 6 à 15.
